(19) Europäisches Patentamt
European Patent Office
Office européen des brevets

(11) Veröffentlichungsnummer: **0 192 919 B1**

(12) **EUROPÄISCHE PATENTSCHRIFT**

(45) Veröffentlichungstag der Patentschrift: 05.06.91

(51) Int. Cl.⁵ **G01N 21/69**

(21) Anmeldenummer: 85890047.5

(22) Anmeldetag: 25.02.85

(54) **Verfahren zur quantitativen Bestimmung von Bestandteilen von Verbrennungsabgasen sowie Einrichtung zur Durchführung des Verfahrens.**

(43) Veröffentlichungstag der Anmeldung:
03.09.86 Patentblatt 86/36

(45) Bekanntmachung des Hinweises auf die Patenterteilung:
05.06.91 Patentblatt 91/23

(84) Benannte Vertragsstaaten:
**DE FR GB IT**

(56) Entgegenhaltungen:
**DE-A- 1 900 309**
**DE-B- 1 087 832**

**APPLIED SPECTROSCOPY, Band 37, Nr. 6, November-Dezember 1983, Seiten 537-539, Society for Applied Spectroscopy, Baltimore Maryland, US; S. G. BARNHART et al.: Fiber optic signal transmission to reduce radio-frequency interference from high-voltage spark source"**

**APPLIED SPECTROSCOPY, Band 35, Nr. 2, März-April 1982, Seiten 92-99, Baltimore, Maryland, US; R.E. RUSSO et al.: Determination of atomic and molecular excited-state lifetimes using an optoelectronic cross-correlation method"**

(73) Patentinhaber: **AVL Gesellschaft für Verbren-nungskraftmaschinen und Messtechnik mbH.Prof.Dr.Dr.h.c. Hans List**
**Kleiststrasse 48**
**A-8020 Graz(AT)**

(72) Erfinder: **Krempl, Peter W., Dr.**
**Stiftingtalstrasse 71/4/12**
**A-8010 Graz(AT)**
Erfinder: **Schiefer, Erich Josef, Dr.**
**Neulassing 17**
**A-8900 Selzthal(AT)**

(74) Vertreter: **Krause, Walter, Dr. Dipl.-Ing. et al**
**Postfach 200 Singerstrasse 8**
**A-1010 Wien(AT)**

APPLIED SPECTROSCOPY, Band 15, Nr. 4, 1961, Seiten 99-101; R.S. HULLINGS: "Minimizing matrix effects in stainless steel, type 422, using oxygen in the analytical gap"

JOURNAL OF PHYSICS E, SCIENT. INSTR., Band 12, Nr. 5, Mai 1979, Seiten 397-402, The Institute of Physics, GB; D.R. AIREY: "A rapid-scanning polychromator for time-resolved temperature and radius measurements in 40kA SF6 arcs"

APPLIED SPECTROSCOPY, Band 29, Nr 5, 09. Oktober 1975, Seiten 436-438; R.S. VOGEL: "A Semiautomated device for controlled atmospheres in optical emission spectroscopy"

**Beschreibung**

Die Erfindung bezieht sich auf ein Verfahren zur quantitativen Bestimmung von Bestandteilen, wie z.B. CO, NO, $NO_2$, SO, $SO_2$, Kohlenwasserstoff und Partikeln, von Verbrennungsabgasen aus Verbrennungsmotoren oder Industrieanlagen, wobei zumindest ein Teil der zu untersuchenden Abgasprobe in den Plasmazustand übergeführt, die vom Plasma abgegebene elektromagnetische Strahlung zumindest teilweise bestimmt und daraus der Anteil von einzelnen oder mehreren Bestandteilen festgestellt wird, sowie eine Einrichtung zur Durchführung des Verfahrens.

Es sind mehrere prinzipielle Möglichkeiten bekannt, Plasmen anzuregen und damit die darin enthaltenen Substanzen zu detektieren, nämlich Flammenspektroskopie, kontinuierliche Gasentladungen, Bogenentladungen, induktiv gekoppelte und lasergenerierte Plasmen.

Ein Verfahren der eingangs genannten Art ist beispielsweise aus der DE-OS 19 00 309 bekannt. Zur Analysierung von Gasen werden deren Komponenten durch eine kontinuierliche Gleichstrom-Hochspannungsentladung zur Abgabe von Lumeneszenzstrahlung angeregt und die entsprechenden Spektren ausgewertet. Die Meßeinrichtung enthält einen vom zu messenden Gas durchströmten Probenraum, welcher zwei mit bestimmten Abstand zueinander angeordnete und an eine Hochspannungsversorgung angeschlossene Elektroden aufweist. Die Wand des Probenraumes weist zwischen den Spitzen der Elektroden einen für die vom Plasma abgegebene elektromagnetische Strahlung durchlässigen Bereich auf. Neben einer kontinuierlichen Anregung ist es aus Applied Spectroscopy Volume 37, Nr. 6, 1983, Seiten 537 bis 538 auch bekannt, Gasproben mittels Hochspannungsfunken anzuregen.

Weiters ist aus dem Journal of Physics E, Scient. Instr. Vol. 12, Nr. 5, Mai 1979, Seiten 397 bis 403 ein Verfahren bekannt, bei welchem mittels Zeitaufgelöster Intensitätsmessung von Emissionslinien Temperatur- und Radiusmessungen von 40 kA Schwefelhexafluorid-Lichtbögen durchgeführt werden. Es werden dabei Stromimpulse mit einer Dauer von 10 ms verwendet.

Mit den bekannten Verfahren ist die Bestimmung der Momentankonzentrationen der nachzuweisenden Substanzen nicht möglich, da es infolge der Art der Plasmaanregung zu Sekundärreaktionen während der Messung kommt, insbesondere wenn die zu detektierenden Gasbestandteile leicht miteinander reagieren, wobei die Reaktionen selbst noch zusätzlich durch die Veränderungen der Probenzusammensetzungen beeinflußt werden.

Bei der Flammenspektroskopie werden durch den Verbrennungsvorgang ebenfalls CO, NO usw.

generiert, wodurch bei der Bestimmung von Verbrennungsabgasen keine Korrelation mit den Schadstoffwerten des Abgases möglich ist.

Die bisher bekannten Verfahren haben zum Teil außerdem den Nachteil, daß sie eine sehr hohe elektrische Leistung benötigen und zum Teil einen hohen Verbrauch an hochreinen und teuren Schutzgasen aufweisen.

Die Erfindung vermeidet die Nachteile der bekannten Verfahren und besteht darin, daß das Abgas, zur Feststellung der Menge an Bestandteilen, die vorhanden ist, bevor sich die Molekülkonzentration durch Sekundärreaktionen im Plasma verändern, mittels im Nanosekunden-Bereich liegenden Hochspannungsfunkendurchschlägen angeregt wird, und daß sodann die Intensität von interessierenden Emissionslinien dieses Plasmas zeitaufgelöst gemessen wird, wobei die Meßintervalle den Lebensdauern der detektierten Emissionslinien der zu bestimmenden Moleküle angepaßt sind. Dadurch kann die ursprüngliche Menge an Abgasbestandteilen festgestellt werden, noch bevor sich die Molekülkonzentrationen durch Sekundärreaktionen im Plasma verändern. Die erzeugten Funkendurchschläge sind zeitlich sehr kurz (im ns-Bereich) und infolgedessen für zeitaufgelöste Messungen der Emission gut verwendbar. Hiebei ergeben sich noch folgende Vorteile: Alle apparativen Teile für die Anregung des Gases mittels Hochspannungsfunkendurchschlägen, wie Spannungsversorgung, Probenraum und Elektroden, sind billig herzustellen. Die Leistungsaufnahme des sehr kompakten und einfach zu bedienenden Gerätes ist gering, wodurch das Verfahren auch für den mobilen Einsatz geeignet ist und die Betriebskosten niedrig gehalten werden können. Durch die Konzentration des mittels eines Funkendurchschlages generierten Plasmas auf einen engen Kanalbereich und durch kurzzeitige Lichtemissions- und Registrierintervalle können sowohl hohe Lichtausbeuten pro Fläche als auch ein gutes Signal-Rauschverhältnis erreicht werden.

Mit schnellen Riesenimpulslasern im ns-Bereich generierte Plasmen wären zwar prinzipiell auch zur Detektierung der Momentankonzentrationen von Abgasbestandteilen geeignet. Diese Systeme haben aber sehr hohe Anschaffungskosten und benötigen hohe elektrische Leistungen, weshalb sie für einen mobilen Einsatz nicht geeignet sind. Eine für diesen Zweck speziell ausgelegte Funkenstrecke hingegen benötigt nur wenig elektrische Energie und ist sowohl im Betrieb als auch in der Herstellung wesentlich billiger.

Die Erfindung ist im stationären und oder mobilen Einsatz für die quantitative Abgasanalyse beispielsweise von Verbrennungsmotoren, Industrieanlagen oder Verbrennungsöfen geeignet. Für eine spektrale Selektion schadstoffspezifischer Linien oder Banden können z.B. übliche schmalbandige Interferenzfilter oder Polychromatoren, für die Registrierung je nach Genauigkeitserfordernis Photodioden, Sekundär-Elektronenvervielfacher oder Bildverstärker verwendet werden.

Besonders vorteilhaft ist es, wenn die integrale Intensität einzelner Linien oder eine Kombination mehrerer Linien, Banden oder breite Teile des Emissionsspektrums zur quantitativen Bestimmung der Abgasbestandteile zeitaufgelöst gemessen wird.

Weiters kann auch die Quenchung der Emissionsintensität von atomaren und/oder molekularen Emissionslinien der Luft- und/oder der Abgasbestandteile zur Feststellung der Konzentrationder Abgasbestandteile herangezogen werden. Unter Quenchung sind hier alle intermolekularen Mechanismen im Probengas, wie beispielsweise strahlungslose Übergänge durch Stöße, zusammengefaßt, welche die Intensität der Emissionslinien der Gasbestandteile vermindern können, wobei diese Quenchung von der Zusammensetzung des Gases abhängig sein kann.

Durch zeitaufgelöste Registrierung können die Momentankonzentrationen der im Abgas enthaltenen gasförmigen Bestandteile festgestellt werden, während die darauffolgende Lichtemission durch die Nachverbrennung von Partikeln Rückschlüsse auf deren Massenkonzentration erlaubt. Es kann mit diesem Verfahren die Beladung eines Abgases mit einzelnen oder auch mehreren Substanzen quasi gleichzeitig gemessen werden, wobei die Steuerung und Auswertung vorteilhaft, beispielsweise mittels einer Mikroprozessoreinheit, durchgeführt werden kann.

In weiterer Ausgestaltung des erfindungsgemäßen Verfahrens kann der Hochspannungsfunke zum Initiieren eines Nachverbrennungsvorganges dienen, dessen kontinuierliche Lichtemission für gravimetrische Messungen von im Abgas enthaltenen Partikeln (z.B. Ruß und kondensierte Kohlenwasserstoffe) verwendet wird.

Es kann von besonderem Vorteil sein, wenn dem Abgas zur besseren Nachverbrennung ein genau definierter Prozentsatz an reinem Sauerstoff zugeführt wird. Dadurch kann die Nachverbrennung intensiviert und damit außerdem das Signal-Rauschverhältnis verbessert werden.

Nach einem weiteren Merkmal der Erfindung kann die Intensität einer Emissionslinie des Stickstoffes als Referenz zur Bestimmung der quantitativen Anteile an anderen Substanzen im Abgas dienen.

Zur Ausübung des erfindungsgemäßen Verfahrens kann in Ausgestaltung der Erfindung und vorteilhaft eine Meßeinrichtung verwendet werden, die dadurch gekennzeichnet ist, daß der Probenraum einen zusätzlichen Anschluß zur Zuführung von Sauerstoff zum Bereich zwischen den Elektrodenspitzen aufweist, um eine dort stattfindende Nachverbrennung intensivieren zu können. Die elektromagnetische Strahlung, welche etwa im Wellenlängenbereichvon 180 bis 3000 nm liegt, kann beispielsweise durch ein Probenraumfenster austreten, wobei die beiden Elektroden nahe von sich bezüglich der Mitte des Probenraumfensters gegenüberliegenden Stellen des Fensterrandes angeordnet sein können und das durch den Funken generierte Plasma zur Selbstreinigung des Probenraumfensters dient.

Weiters können die Elektroden erfindungsgemäß schneidenförmig ausgebildet sein, wobei das zu messende Abgas den Probenraum senkrecht oder parallel zu den Elektrodenschneiden durchströmen kann, und die eine Elektrode mittels einer Triggerfunkenstrecke, eines Thyratrons oder eines anderen schnellen Hochspannungsschaltelementes auf Erdpotential legbar ist, wodurch der Funkendurchschlag initiiert wird.

Erfindungsgemäß kann der Anschluß für die Sauerstoffzufuhr so angeordnet sein, daß die Sauerstoffzufuhr entlang des Beobachtungsbereiches in der Wand des Probenraumes erfolgt, wodurch die Selbstreinigung des Beobachtungsfensters begünstigt wird.

In weiterer Ausgestaltung kann bei der Meßeinrichtung erfindungsgemäß die Strahlungsübertragung vom Probenraum zu den Registriereinheiten mittels Lichtleiter oder Lichtleiterstäbenerfolgen, wodurch Störungen durch RF-Abstrahlung des Funkens vermieden werden können.

Die Erfindung wird nachfolgend anhand der Zeichnung näher erläutert. Es zeigen:

Figur 1 ein Blockschaltbild, anhand dessen das erfindungsgemäße Meßverfahren erläutert wird,

Figur 2 bis 5 verschiedene Probenraum- und Elektrodenanordnungen, und

Figur 6 bis 9 andere Probenraum- und Elektrodenanordnungen.

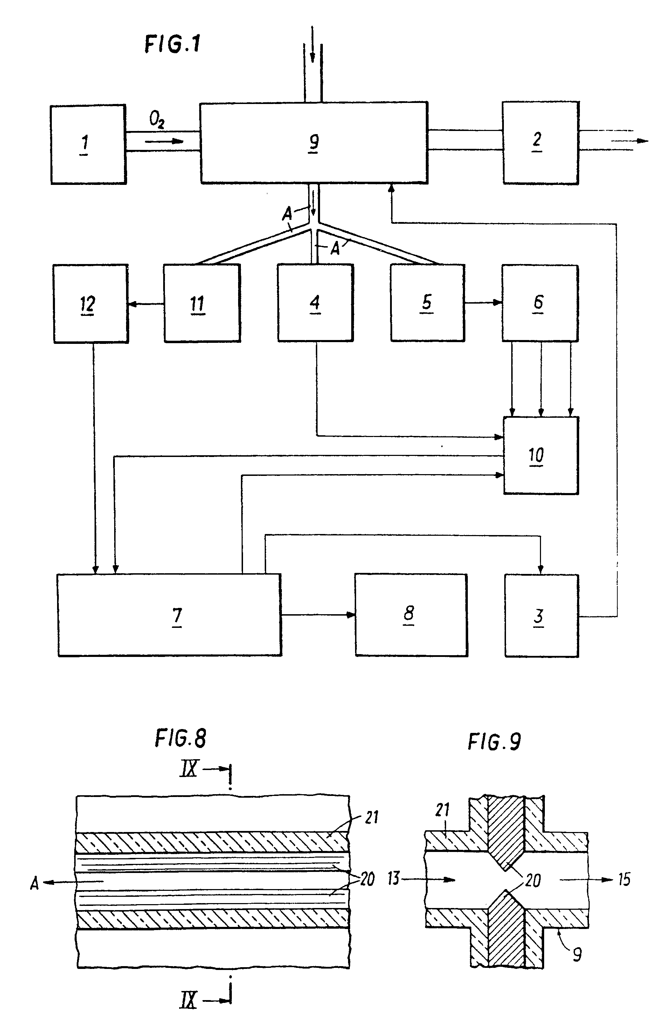

In schematischer Darstellung zeigt Fig. 1 den Probenraum 9 mit Gasanschlüssen, den Elektroden und den Beobachtungsfenstern. Mit 1 ist eine Einrichtung zur Zuführung von Sauerstoff in den Probenraum 9 zur verbesserten Nachverbrennung von Partikeln bezeichnet. Die Pumpe 2 dient zum Ansaugen des Abgases durch den Probenraum 9. Die nichtdargestellte Funkenstrecke im Probenraum 9 wird von einer eigenen Hochspannungsversorgung 3 gespeist und durch eine Mikroprozessor-Rechnereinheit 7 rechnergesteuert und getriggert. Die Strahlungsübertragung vom Probenraum zu den Registriereinheiten 4, 5 und 11 wird beispielsweise mittels Multifaserlichtleitern oder Lichtleiterstäben A durchgeführt, um elektrische Störungen infolge der RF-Abstrahlung der Funken zu vermeiden. Mittels der z.B. als schnelle Photodiode ausgebildeten Registriereinheit 4 wird das zeitliche Registrierintervall zur Messung der Linienintensitäten durch die Elektronik 10 gesteuert. Von der vom generierten Plasma emittierten elektromagnetischen Strahlung werden mittels der Registriereinheiten 4, 5, einem Interferenzfilteroder Polychromator die für die gesuchte Substanz spezifischen Linien selektiert und mittels Photomultipliers oder Dioden 6 registriert. Die dabei erhaltenen Meßwerte werden mit Hilfe des Triggersignals von der Registriereinheit 4 zeitaufgelöst bei Molekülen und integral bei Partikeln in der Elektronik 10 registriert und in der Mikroprozessor- und Rechnereinheit 7 ausgewertet und die ermittelten Ergebnisse mit einem Drucker oder Anzeiger 8 dargestellt. Mittels eines Interferenzfilters, beispielsweise in der Einheit 11, kann eine Stickstofflinie selektiert und in der Meßeinheit 12 deren Intensität gemessen werden, welche als Referenz zur Bestimmung der Anteile von anderen Substanzen im Abgas dienen kann.

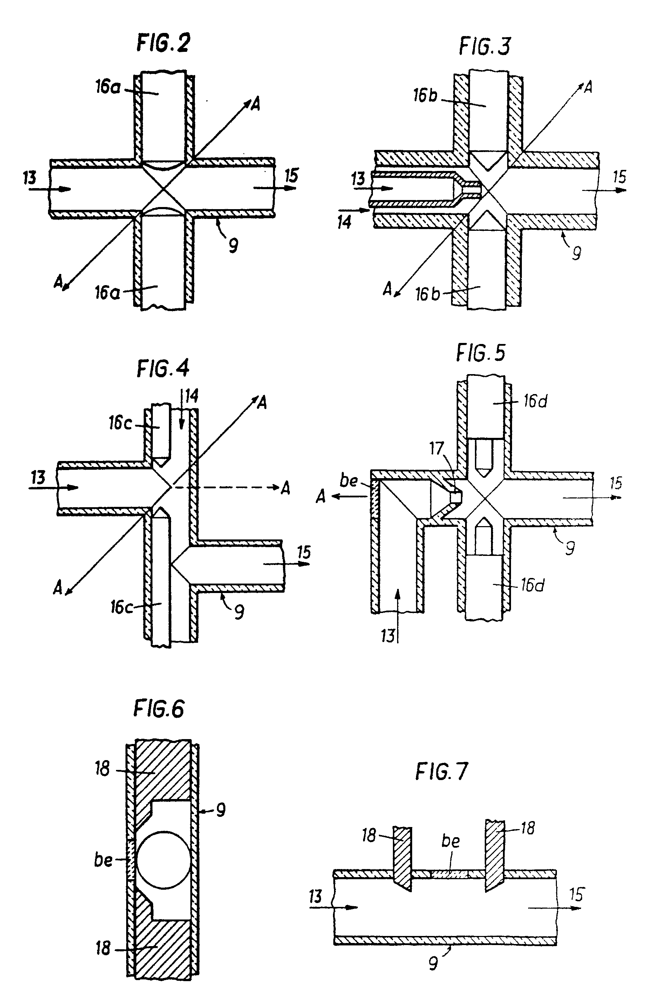

Die Fig. 2 bis 5 zeigen verschiedene mögliche Arten von Probenräumen, wobei beispielsweise sowohl die Elektroden, als auch die Probenraumformen variiert werden. Die Probenraumwand besteht zumindest teilweise aus einem für zumindest einen Teil der vom Plasma abgegebenen Strahlung (etwa von 180 - 3000 nm) durchlässigen Medium, beispielsweise Glas, 13 sind die Anschlüsse zur Abgas-, 14 zur Sauerstoffzufuhr, und mit 15 ist der Anschluß zum Absaugen des Abgases aus dem Probenraum bezeichnet. A sind die Anschlüsse für Faserlichtleiter oder Lichtleiterstäbe, 16a, 16b, 16c, 16d sind die Elektroden, welche aus möglichst hitzebeständigem und inertem Material, beispielsweise Wolfram oder Platin, bestehen. Die Electroden 16b, 16c und 16d bilden infolge ihrer spitzen Elektrodenenden stabile Kanäle aus. Die Probenräume 9 der Fig. 3 und 4 erlauben die Zuführung von Sauerstoff, welcher beim Probenraum nach Fig. 4 zugleich eine Verschmutzung des Beobachtungsbereiches der Probenraumwand verhindert. Auch durch die Anordnung des Probenraumes 9 nach Fig. 5 werden Verunreinigungen des Probenraumfensters "be" vermieden und außerdem durch eine Düse 17 eine bessere Ausnutzung des Rohrquerschnittes für die Partikelnachverbrennung ermöglicht.

Die Fig. 6 und 7 zeigen Probenraum- Elektrodenanordnungen, bei welchen das Probenraumfenster "be" selbsttätig durch das funkengenerierte Plasma infolge dessen hoher Temperatur und der entstehenden Schockwelle gereinigt wird bzw. eine Verschmutzung von vorneherein vermieden werden kann.

Die Elektroden 18 sind so angeordnet, daß der Funke entlang der Oberfläche des Probenraumfensters "be" durchschlägt, wodurch die Einwirkung des Plasmas optimal ist und außerdem eine höhere Strahlungsausbeute ermöglicht wird, da die Emissionszone unmittelbar an der Austrittsfläche angrenzt. Die den Probenraum 9 bildende Küvette nach Fig. 6 ist kreuzförmig angeordnet, mit seitlich eingeschmolzenen oder eingeklebten Elektroden 18. Bei der den Probenraum 9 bildenden Küvette nach Fig. 7 sind die Elektroden 18 in ein Glasrohr längsseitig eingeschmolzen.

Fig. 8 und die einen Schnitt entlang der Linie IX-IX in Fig. 8 darstellende Fig. 9 zeigen eine schematische Probenraum-Elektrodenanordnung, welche prinzipiell den Konstruktionen in sogenannten TEA-Lasern entspricht. Flache Elektrodenschneiden 20 sind in isolierendem Material 21 des Probenraumes 9 eingebettet. Das zu detektierende Abgas wird hier beispielsweise senkrecht zur Längsrichtung der Elektroden 20 entlang der Pfeile 13, 15 durchgesaugt oder durchgeblasen. Die Beobachtung der Emission erfolgt entlang der Richtung der Elektrodenschneiden. A ist ein möglicher Anschluß für einen Lichtleiter.

## Ansprüche

1. Verfahren zur quantitativen Bestimmung von Bestandteilen, wie z.B. CO, NO, NO$_2$, SO, SO$_2$, Kohlenwasserstoff und Partikeln, von Verbrennungsabgasen aus Verbrennungsmotoren oder Industrieanlagen, wobei zumindest ein Teil der zu untersuchenden Abgasprobe in den Plasmazustand übergeführt, die vom Plasma abgegebene elektromagnetische Strahlung zumindest teilweise bestimmt und daraus der Anteil von einzelnen oder mehreren Bestandteilen festgestellt wird, **dadurch gekennzeichnet**, daß das Abgas, zur Feststellung der Menge an Bestandteilen, die vorhanden ist, bevor sich die Molekülkonzentrationen durch Sekundärreaktionen im Plasma verändern, mittels im Nanosekunden-Bereich liegenden Hochspannungsfunkendurchschlägen angeregt wird, und daß sodann die Intensität von interessierenden Emissionslinien dieses Plasmas zeitaufgelöst gemessen wird, wobei die Meßintervalle den Lebensdauern der detektierten Emissionslinien der zu bestimmenden Moleküle angepaßt sind.

2. Verfahren nach Anspruch 1, **dadurch gekennzeichnet**, daß die integrale Intensität einzelner Linien oder eine Kombination mehrerer Linien, Banden oder breite Teile des Emissionsspektrums zur quantitativen Bestimmung der Abgasbestandteile zeitaufgelöst gemessen wird.

3. Verfahren nach Anspruch 1, **dadurch gekennzeichnet**, daß der Hochspannungsfunke zum Initiieren eines Nachverbrennungsvorganges dient, dessen kontinuierliche Lichtemission für gravimetrische Messungen von im Abgas enthaltenen Partikeln, wie z.B. Ruß und kondensierte Kohlenwasserstoffe, verwendet wird.

4. Verfahren nach Anspruch 3, **dadurch gekennzeichnet**, daß dem Abgas zur besseren Nachverbrennung ein genau definierter Prozentsatz an reinem Sauerstoff zugeführt wird.

5. Verfahren nach einem der Ansprüche 1 bis 4, **dadurch gekennzeichnet**, daß die Intensität einer Emissionslinie des Stickstoffes als Referenz zur Bestimmung der quantitativen Anteile von anderen Substanzen im Abgas dient.

6. Meßeinrichtung zur Ausübung des Verfahrens nach einem der Ansprüche 1 bis 5 mit einem vom zu untersuchenden Abgas durchströmten Probenraum, der je eine Zu- und Ableitung für das Abgas, sowie zwei mit bestimmten Abstand zueinander angeordnete und an eine Hochspannungsversorgung angeschlossene Elektroden aufweist, wobei die Wand des Probenraumes zumindest zwischen den Spitzen der Elektroden einen zumindest teilweise für die vom Plasma abgegebene elektromagnetische Strahlung durchlässigen Bereich aufweist, **dadurch gekennzeichnet**, daß der Probenraum (9) einen zusätzlichen Anschluß (14) zur Zuführung von Sauerstoff zum Bereich zwischen den Elektrodenspitzen aufweist.

7. Meßeinrichtung nach Anspruch 6, **dadurch gekennzeichnet**, daß der Anschluß (14) für die Sauerstoffzufuhr so angeordnet ist, daß die Sauerstoffzufuhr entlang des Beobachtungsbereiches in der Probenraumwand erfolgt.

8. Meßeinrichtung nach Anspruch 6, **dadurch gekennzeichnet**, daß die Elektroden schneidenförmig ausgebildet sind.

9. Meßeinrichtung nach einem der Ansprüche 6 bis 8, **dadurch gekennzeichnet,** daß die Strahlungsübertragung vom Probenraum (9) zu den Registriereinheiten mittels Lichtleiter oder Lichtleiterstäben (A) erfolgt, wodurch Störungen durch die RF-Abstrahlung des Funkens vermieden werden können.

**Claims**

1. Method of quantitatively determining components such as for example CO, NO, $NO_2$, SO, $SO_2$, hydrocarbon and particles in combustion gases from internal combustion engines or industrial installations, at least part of the exhaust gas sample which is to be investigated being transformed into a plasma state, the electromagnetic radiation emitted by the plasma being at least partially determined and from it the proportion of single or several components being determined, characterised in that the exhaust gas, for determining the quantity of components, which is present, before the molecular concentrations are altered by secondary reactions in the plasma, is excited by means of high voltage spark discharges lying in the nanosecond range, and that thereupon the intensity of emission lines of interest in this plasma are measured in a time-triggered manner, the measuring intervals of the time duration of the detected emission lines being matched to the molecule to be determined.

2. Process according to claim 1 characterised in that the integral intensity of individual lines or of a combination of several lines, bands or broad parts of the emission spectrum are measured in a time-triggered manner for quantitatively determining the exhaust gas components.

3. Process according to claim 1 characterised in that the high voltage spark serves to initiate an after-burning process from which the continuous light emission is employed for gravimetric measurements of particles contained in the exhaust gas, such as for example, carbon black and condensed hydrocarbons.

4. Process according to claim 3 characterised in that the exhaust gas has an accurately defined percentage of pure oxygen added to it for improved after burning.

5. Process according to one of claims 1 to 4 characterised in that the intensity of an emission line of nitrogen serves as a reference for determining the quantitative proportions of other substances in the exhaust gas.

6. Measuring device for carrying out the process according to one of claims 1 to 5 with a sample chamber through which the exhaust gas to be analysed is caused to flow, the chamber having a respective supply and exhaust passage for the exhaust gas and two electrodes connected to a high-voltage supply and arranged a predetermined distance apart, the wall of the sample chamber having a region which is at least partially transparent to the electromagnetic radiation emitted by the plasma, at least between the tips of the electrodes, characterised in that the sample chamber (9) has an additional connection (14) for feeding oxygen to the region between the tips of the electrodes.

7. Measuring device according to claim 6 characterised in that the connection (14) for the supply of oxygen is arranged so that the oxygen supply takes place along the observation region in the wall of the sample chamber.

8. Measuring device according to claim 6 characterised in that the electrodes are in the form of blades.

9. Measuring device according to one of claims 6 to 8 characterised in that the transfer of the radiation from the sample chamber (9) to the recording units takes place by means of light pipes or light-conducting rods (A) whereby interference from RF radiation from the spark can be avoided.

**Revendications**

1. Procédé pour déterminer quantitativement des constituants, tels que, par exemple, CO, NO, $NO_2$, SO, $SO_2$, carbure d'hydrogène et particules, de gaz d'échappement provenant de combustion, par exemple dans des moteurs à combustion interne ou des installations industrielles, procédé selon lequel une partie au moins de l'échantillon de gaz d'échappement à examiner est transformée à l'état de plasma, le rayonnement électromagnétique émis par le plasma est déterminé au moins partiellement, et la proportion de constituants individuels, ou de plusieurs constituants, en est déduite, procédé caractérisé en ce que le gaz d'échappement, pour déterminer la quantité des parties constituantes, existantes, avant modification des réactions moléculaires par des réactions secondaires dans le plasma, soit excité dans le domaine des nona-secondes au moyen de décharges, à haute tension, et en ce que l'intensité des lignes d'émission de ce plasma est mesuré par une mesure décomposée dans le temps, ou l'intervalle de mesure sont adaptées à la durée de vie des lignes d'émission détectées des molécules à déterminer.

2. Procédé selon la revendication 1, caractérisé en ce que l'on utilise l'intensité intégrale de lignes individuelles ou d'une combinaison de plusieurs lignes, bandes ou parties larges du spectre d'émission, pour déterminer quantitativement les constituants du gaz d'échappement.

3. Procédé selon la revendication 1, caractérisé en ce que l'on se sert de l'étincelle à haute tension pour amorcer un processus de post-combustion, dont on utilise l'émission luminescente continue pour des mesures gravimétriques de particules (par exemple, suie ou hydrocarbures condensés) contenues dans le gaz d'échappement.

4. Procédé selon la revendication 3, caractérisé en ce que l'on amène au gaz d'échappement, en vue d'une meilleure post-combustion, un pourcentage, défini avec précision, d'oxygène pur.

5. Procédé selon l'une des revendications 1 à 4, caractérisé en ce que l'on se sert de l'intensité d'une ligne d'émission de l'azote comme référence pour déterminer les proportions quantitatives d'autres substances dans le gaz d'échappement.

6. Dispositif de mesure pour la mise en oeuvre du procédé selon l'une des revendications 1 à 5, caractérisé en ce que 18 chambre d'échantillonnage (9), traversée par le gaz d'échappement à examiner, comporte une conduite d'amenée et une conduite d'évacuation (13, 15) pour le gaz d'échappement, ainsi que deux électrodes (16, 18, 20) disposées à une distance déterminée l'une de l'autre et raccordées à une alimentation en haute tension, et en ce que la paroi de la chambre d'échantillonnage (9), au moins à proximité de la zone comprise entre les pointes des électrodes (16, 18, 20), est perméable au moins partiellement au rayonnement électromagnétique émis par le plasma.

7. Dispositif de mesure selon la revendication 6, caractérisé en ce que l'amenée d'oxygène s'effectue le long de la zone d'observation prévue dans la paroi de la chambre d'échantillonnage.

8. Dispositif de mesure selon la revendication 6, caractérisé en ce que les électrodes sont constituées en forme de biseau.

9. Dispositif de mesure selon l'une des revendications 6 à 8, caractérisé en ce que la transmission du rayonnement de la chambre d'échantillonnage (9) aux unités d'enregistrement s'effectue au moyen de conducteurs de lumière ou barres conductrices de lumière (A), permettant d'éviter des perturbations sous l'effet de la radiation émise par l'étincelle.

**FIG.1**

**FIG.8**

**FIG.9**

FIG.2

FIG.3

FIG.4

FIG.5

FIG.6

FIG.7